# EUROPÄISCHE PATENTSCHRIFT

(11) **EP 3 977 668 B1**
(45) Veröffentlichungstag und Bekanntmachung des Hinweises auf die Patenterteilung: **25.01.2023**
(21) Anmeldenummer: 20725489.7
(22) Anmeldetag: 08.05.2020
(51) Int. Cl.: H04L 9/08, G06F 8/30, G06F 8/35

(54) **SYSTEM ZUR ERZEUGUNG VON KRYPTOGRAFISCHEM MATERIAL**
SYSTEM FOR PRODUCING CRYPTOGRAPHIC MATERIAL
SYSTÈME DE GÉNÉRATION DE MATÉRIAU CRYPTOGRAPHIQUE

(30) Priorität: 03.06.2019 DE 102019003904
(43) Veröffentlichungstag der Anmeldung: 06.04.2022
(73) Patentinhaber: Mercedes-Benz Group AG, 70372 Stuttgart (DE)
(72) Erfinder: FRIESEN, Viktor, 76139 Karlsruhe (DE); PAVLOVIC, Viktor, 70469 Stuttgart (DE)
(74) Vertreter: JENSEN & SON
(86) Internationale Anmeldenummer: PCT/EP2020/062886
(87) Internationale Veröffentlichungsnummer: WO 2020/244886

(56) Entgegenhaltungen:
- EP-A1- 3 261 013
- EP-A1- 3 474 488
- EP-A2- 1 890 228
- DE-A1-102018 120 915

## Beschreibung

Die Erfindung betrifft ein System zur Erzeugung von kryptografischem Material mit einem Kryptomaterial-Server und einem Entwicklermodul nach der im Oberbegriff von Anspruch 1 näher definierten Art. Die Erfindung betrifft ferner ein Verfahren zur Erzeugung von kryptografischem Material mittels eines solchen Systems.

Der Einsatz von kryptografischem Material ist in vielen modernen Systemen zum Erreichen einer zuverlässigen und sicheren Kommunikation, in welche Dritte nicht manipulativ eingreifen können, unerlässlich. Vor allem moderne Fahrzeuge zeichnen sich durch eine zunehmende Vernetzung aus. Dabei sind die Fahrzeuge nicht nur mit allgemein zugänglichen Systemen wie dem WorldWideWeb bzw. Internet verbunden sondern auch mit dedizierten von Fahrzeugherstellern und Dienstleistern zur Verfügung gestellten Systemen, wie beispielsweise Apps oder Servern, die z.B. vom Hersteller exklusiv für die eigenen Fahrzeuge bzw. die eigene Flotte entwickelt und betrieben werden. Auch Dienstleister können entsprechende Dienste, ggf. in Kooperation mit dem Hersteller, anbieten. Beispiele könnten eine Zugangsberechtigung/Fahrberechtigung in einem Car-Sharing System, eine serverbasierte Navigationslösung oder dergleichen sein.

Durch die vielfältigen Kommunikationsbeziehungen innerhalb eines solchen Fahrzeug-Ökosystems entstehen eine Vielzahl von Zugangskonten, Schnittstellen und Anwendungen, die allesamt durch geeignete kryptografische Verfahren und die dahinter liegenden Mechanismen, Protokolle und dergleichen etc. abgesichert werden müssen. Dabei bildet das Fahrzeug-Ökosystem aus Sicht der informationstechnischen Sicherheit (IT-Security) ein sehr spezielles und schwieriges Umfeld. Das liegt an vielfältigen Gründen, wie z.B. an eingeschränkten Hardware-Ressourcen, am Fehlen des direkten Zugriffs auf die Fahrzeuge beim Kunden, an überwiegend nicht-standardisierten heterogenen Systemen usw. Diese Spezifika führen dazu, dass standardisierte kryptografische Verfahren oft nicht direkt übernommen werden können und stattdessen eigene speziell zugeschnittene Lösungen entwickelt werden müssen. Diese speziell zugeschnittenen kryptografischen Verfahren benötigen vielfältiges kryptografisches Material, das für die jeweilige Anwendung/Schnittstelle optimiert werden muss, um eine maximale Sicherheit bei minimalen Kosten und bestmöglichem Komfort zu ermöglichen. Unter kryptografischem Material bzw. Kryptomaterial im Sinne der hier vorliegenden Erfindung werden dabei Daten verstanden, die für kryptografische Zwecke verwendet werden können. Dies können insbesondere asymmetrische Schlüsselpaare, symmetrische Schlüssel, Zertifikate, Zufallszahlen, Hashwerte und dergleichen sein. Dabei ist es ferner so, dass verteilte Systeme und Anwendungen auf vielfältige Weise miteinander zusammenhängen. Dies gilt entsprechend auch für das kryptografische Material, welches auf den jeweiligen Systemen installiert sein muss, bevor diese in Betrieb genommen werden können. Man spricht in diesem Zusammenhang vom sogenannten "Provisioning". Des Weiteren ist das Fahrzeug-Ökosystem permanenten Änderungen unterworfen. So werden z.B. bereits aktive Systeme via Software-Update aktualisiert oder es kommen neue Systeme, wie Fahrzeuge, App-Installationen usw., hinzu oder dergleichen. Viele dieser Änderungen benötigen neues kryptografisches Material. Das bedeutet, dass auch für etablierte Anwendungen und Systeme laufend neues kryptografisches Material erzeugt werden muss. Es reicht also nicht aus, wenn die Systeme einmalig vor der Inbetriebnahme mit dem zu diesem Zeitpunkt nötigen kryptografischen Material versorgt worden sind.

All dies führt letztlich dazu, dass das auf den jeweiligen Systemen vorinstallierte kryptografische Material sehr komplex werden kann. Außerdem ist es notwendig, das kryptografische Material auf sicheren Systemen zu erzeugen und auf sicheren Kommunikationswegen zu verteilen. Damit wird die korrekte, sichere und robuste Erzeugung und Verteilung des jeweils passenden kryptografischen Materials eine große zeit- und kostenintensive Herausforderung.

Aus dem allgemeinen Stand der Technik ist es dabei bekannt, dass kryptografisches Material auf einem System mit einem Kryptomaterial-Server erzeugt und typischerweise gespeichert wird. Den Kern dieses Kryptomaterial-Servers kann dabei ein Hardware-Sicherheitsmodul, welches in Fachkreisen auch als Hardware Security Modul (HSM) bezeichnet wird ausbilden. Ein typisches Beispiel für ein kommerzielles HSM sind die Produkte von Thales, beispielsweise das nShield Connect HSM. Ein solches bietet Schnittstellen für Anwenderprogramme an. Unter Ausnutzung dieser Schnittstellen wird dann ein Programm in einer höheren Programmiersprache (z.B. Java oder C++) implementiert, mit dessen Hilfe die sichere Erzeugung des Kryptomaterials in dem HSM und seine Speicherung und Verteilung auf dem Kryptomaterial-Server gesteuert wird. Soll Kryptomaterial für eine neue Anwendung erzeugt werden, wird für diese Anwendung ein neues Programm geschrieben oder ein bestehendes Programm entsprechend erweitert bzw. geändert.

Das Kryptomaterial für die verteilten Anwendungen in einem Fahrzeug-Ökosystem kann, wie schon beschrieben, sehr komplex werden. Es bezieht häufig verschiedene Merkmale der beteiligten Systeme, wie z.B. Identitäten, Versionen, Rechte, etc. sowie diverse Zusammenhänge zwischen ihnen mit ein und baut i.d.R. auf bisher bereits erzeugtem Kryptomaterial auf. Durch diese Komplexität werden die Abstimmung des zu generierenden Kryptomaterials, dessen Spezifikation, anschließende Implementierung und deren Test schnell extrem aufwändig.

Zum Stand der Technik im Bereich der privaten kryptografischen Schlüssel kann in diesem Zusammenhang auf die DE 10 2015 208 899 A1 hingewiesen werden. Gemäß der dortigen Offenbarung werden bei der Erzeugung von kryptografischem Material, hier dem privaten kryptografischen Schlüssel, ein privater Startwert sowie zumindest ein Kontextparameter verwendet.

Die DE 10 2018 120 915 A1 offenbart ein System zur Erzeugung von kryptografischem Material mit einem Kryptomaterial-Server und einem Entwicklermodul. Der Kryptomaterial-Server umfasst einen Kryptomaterial-Generator und einen Kryptomaterial-Verteiler.

In der EP 3 474 488 A1 wird ein System zur Erzeugung von kryptografischem Material beschrieben, welches einen schlüsselerzeugenden und -verteilenden Server und eine Schnittstelle zur Datenübertragung umfasst.

Die Aufgabe der hier vorliegenden Erfindung besteht nun darin, ein System und ein Verfahren zur Erzeugung von kryptografischem Material, insbesondere für Fahrzeuganwendungen, anzugeben, welche den extremen oben beschriebenen Aufwand deutlich reduzieren.

Erfindungsgemäß wird diese Aufgabe durch die Merkmale im Anspruch 1 und hier insbesondere im kennzeichnenden Teil des Anspruchs 1 gelöst. Vorteilhafte Ausgestaltungen und Weiterbildungen hiervon ergeben sich aus den abhängigen Unteransprüchen. Eine verfahrensgemäße Lösung mit einem solchen System ist in Anspruch 15 angegeben.

Das erfindungsgemäße System zur Erzeugung von kryptografischem Material umfasst, vergleichbar wie die Systeme im Stand der Technik, einen Kryptomaterial-Server sowie ein Entwicklermodul. Der Kryptomaterial-Server umfasst seinerseits den eigentlichen Kryptomaterial-Generator sowie einen Kryptomaterial-Verteiler, welcher das erzeugte Kryptomaterial an die entsprechenden Empfänger und Nutzer weitergibt. Diese können dabei gegebenenfalls auch identisch sein, müssen dies jedoch nicht. Beispiele für Empfänger wären beispielsweise Email-Accounts oder Server zum Aufspielen des Materials auf Produkte. Beispiele für Nutzer wären beispielsweise das Produkt selbst, beispielsweise das Steuergerät eines Fahrzeugs, eine Anwendung, insbesondere eine App auf einem mobilen Endgerät, oder auch ein Server, welcher mit dem entsprechenden Produkt, insbesondere einem Fahrzeug, kommuniziert. Der Kryptomaterial-Generator ist dabei dazu eingerichtet, das benötigte Kryptomaterial für die entsprechenden Empfänger/Nutzer zu erzeugen. Diese Erzeugung bzw. Generierung des Kryptomaterials erfolgt dabei anhand von Spezifikationen, welche entsprechend des Produkts und der Nutzung des kryptografischen Materials vorgegeben werden. Hierfür dient das Entwicklermodul. Dieser Aufbau ist soweit sehr ähnlich wie der Aufbau im Stand der Technik.

Erfindungsgemäß ist es nun so, dass an die Stelle einer aufwändigen Beschreibung der Einsatzsituation für das Kryptomaterial mit einer anschließenden ebenso aufwändigen Programmierung eines speziellen Programms in einer Hochsprache, welches dann auf dem Kryptomaterial-Server installiert wird und für die Generierung des geeigneten Kryptomaterials sorgt, ein automatisierter Prozess tritt. Dafür ist es erfindungsgemäß vorgesehen, dass der Kryptomaterial-Server einen Empfangsteil einer Spezifikationsschnittstelle und das Entwicklermodul einen korrespondierenden Sendeteil der Spezifikationsschnittstelle aufweist. Diese sind so ausgelegt und direkt oder mittelbar miteinander zu koppeln, sodass eine sichere Übertragung von Daten erfolgen kann. Die Kopplung kann beispielsweise über einen sicheren kabellosen oder kabelgebundenen Übertragungsweg erfolgen. Auch ist es möglich, die im Entwicklermodul generierten Spezifikationen, beispielsweise über einen USB-Stick oder dergleichen, auf den Kryptomaterial-Server sicher zu übertragen, sodass die Gefahr einer Korrumpierung der Datenübertragung minimiert werden kann.

Das Entwicklermodul selbst weist nun ein Benutzerinterface auf oder ist mit einem solchen direkt oder mittelbar zu koppeln. Das Benutzerinterface ist für eine Eingabe der Spezifikationen in abstrakter Form eingerichtet. Das Gesamtsystem weist außerdem ein Transformationsmodul auf, welches zur automatischen Transformation der eingegebenen Spezifikationen in eine Syntax des Kryptomaterial-Generators ausgebildet ist. Das erfindungsgemäße System erlaubt es somit durch das Transformationsmodul, eine abstrakte, formale "Sprache" zur eindeutigen Beschreibung des benötigten kryptografischen Materials zu nutzen. Eine solche abstrakte, formale und "ausführbare" Sprache kann dann zur Beschreibung von allgemeinen und beliebig komplexen Spezifikationen an das kryptografische Material genutzt werden. Eine solche Sprache lässt sich entsprechend einfach entwickeln. Sie ist dabei vollständig, was bedeutet, dass alle denkbaren Varianten des Kryptomaterials definiert werden können wie beispielsweise alle gängigen Kryptoverfahren, insbesondere die die von dem Kryptomaterial-Generator oder seinen Subkomponenten unterstützt werden. Es können alle gängigen Kodierungsverfahren eingesetzt werden, beispielsweise vor dem Signieren oder Verschlüsseln ASN.1/DER. Ferner können gängige Komprimierungsverfahren zum Einsatz kommen, sodass beispielsweise vor dem Versenden eine Komprimierung über ZIP erfolgen kann.

Die abstrakte Form einer solchen Sprache bedeutet, dass die Nutzung dieser Sprache für menschliche Benutzer einfach und intuitiv ist, sowohl für das Erstellen der Spezifikationen für das kryptografische Material als auch für das Lesen bereits erstellter Spezifikationen. Formal bezieht sich ferner auf eine formale Syntax der Sprache, sodass jede formulierte Spezifikation eine eindeutige Bedeutung sowohl für den Benutzer als auch für das System hat. Damit lässt sich die eingegebene Spezifikation automatisiert von dem Transformationsmodul verstehen und interpretieren. Das Transformationsmodul ist dann in der Lage, die eingegebenen Spezifikationen automatisiert in eine Syntax umzuwandeln, welche der Kryptomaterial-Generator entsprechend versteht und nutzen kann. Eine solche Sprache für das Transformationsmodul soll ferner ausführbar sein, was bedeutet, dass aus der abstrakten Beschreibung des benötigten Kryptomaterials automatisch ein entsprechendes Programm mit den Spezifikationen in der Syntax des Kryptomaterial-Generators erzeugt wird, welches auf diesem unmittelbar genutzt werden kann, um das benötigte kryptografische Material einfach, sicher und zuverlässig zu generieren.

Damit ergibt sich als entscheidender Vorteil des erfindungsgemäßen Systems eine erhebliche Zeitersparnis und damit letztlich eine Kostenreduktion bei der Erzeugung des Kryptomaterials. Außerdem lässt sich durch die Automatisierung eine bessere Wiederholgenauigkeit und damit letztlich eine höhere Qualität des erzeugten kryptografischen Materials realisieren. Durch die Nutzung einer gemeinsamen festgelegten Sprache zur Formulierung und Eingabe der Spezifikationen in das Benutzerinterface werden außerdem Missverständnisse zwischen einzelnen Entwicklern, welche für verschiedene Schritte des Ablaufs im bisherigen Verfahren zuständig waren, ausgeschlossen, sodass über das erfindungsgemäße System eine hohe Qualität bei einer Minimierung von Fehlinterpretationen erreicht werden kann. Im Zweifelsfall lässt sich die Korrektheit einer Aussage immer sehr einfach durch die Nutzung der formalen Sprache mit ihrer eindeutigen Festlegung verifizieren.

Die Nutzung einer formalen Sprache für die Spezifikationen erlaubt es ferner eine Art Bibliothek, beispielsweise in Form einer Datenbank, anzulegen, um so die Erstellung neuer Spezifikationen aufgrund von der Wiederverwendung einzelner Teile bisheriger Spezifikationen entsprechend zu vereinfachen. Auch eine derartige Bibliothek erhöht letztlich nicht nur die Effizienz bei der Erstellung des benötigten kryptografischen Materials, sondern auch dessen Qualität, sofern in der Bibliothek lediglich Spezifikationsbausteine vorgehalten werden, welche sich im weiteren Verlauf ihres Einsatzes bereits als fehlerfrei erwiesen haben.

Die Nutzung einer maschinenlesbaren Sprache in dem Transformationsmodul erlaubt es außerdem, dass der Prozess des Festlegens und Eingebens der Spezifikationen maschinell unterstützt werden kann. So lässt sich beispielsweise ein syntaxgesteuerter Editor einsetzen, welcher eine Syntaxprüfung ermöglicht und damit unvollständige Spezifikationen beispielsweise grafisch anzeigen kann, bevor diese an das Transformationsmodul übertragen werden.

Da auf diese Art der Eingabe und die automatisierte Transformation der Spezifikationen in ein Programm und den daraus resultierenden Wegfall der Programmiertätigkeit gegenüber dem Verfahren aus dem Stand der Technik zahlreiche Fehlerquellen eliminiert werden können, wird letztlich auch das Testen der Implementierung des erzeugten kryptografischen Materials sehr stark vereinfacht bzw. kann im Idealfall vollständig entfallen.

Somit ergeben sich in allen Phasen der Entwicklung, also in der Abstimmung der Spezifikationen, in der Implementierung und im Test, erhebliche Zeit- und Kostenvorteile. Insbesondere kann die Dauer zwischen dem Zeitpunkt, zu dem festgestellt wird, dass kryptografisches Material benötigt wird, und dessen Bereitstellung von bisher mehreren Monaten auf wenige Wochen oder Tage reduziert werden.

Eine in dem Transformationsmodul ausführbare abstrakte formale Sprache zur Beschreibung des beliebig komplexen Kryptomaterials ist dabei mit vertretbarem Aufwand in ihrer Entwicklung verbunden. Trotz seiner Komplexität ist das kryptografische Material im Kern lediglich ein Datensatz, der statisch beschrieben werden kann. Dies bedeutet, dass die volle Mächtigkeit einer höheren Programmiersprache wie beispielsweise C++ oder Java, man spricht hier auch von der Turing-Mächtigkeit, der Programmiersprache zur Beschreibung von kryptografischem Material gar nicht nötig ist. Sehr viel primitivere statische Mittel reichen hierfür vollständig aus. Eine solche abstrakte statische Beschreibung lässt sich nun jedoch sehr einfach und problemlos automatisiert in ausführbaren Programmcode transformieren. Die automatische Transformation stellt also keine grundsätzliche Hürde dar.

Eine sehr vorteilhafte Weiterbildung des erfindungsgemäßen Systems sieht es dabei vor, dass das Transformationsmodul in dem Kryptomaterial-Generator ausgebildet ist. Das Transformationsmodul kann also insbesondere Teil des eigentlichen Kryptomaterial-Generators sein, sodass über die Spezifikationsschnittstelle lediglich die in abstrakter Form über die eben näher beschriebene Sprache eingegebenen Spezifikationen übertragen werden und der gesamte Transformationsprozess innerhalb des Kryptomaterial-Generators erfolgt. Dies ist im Aufbau sehr sicher.

Eine außerordentlich günstige Weiterbildung sieht es bei dem erfindungsgemäßen System ferner vor, dass der Kryptomaterial-Generator ein Hardware-Sicherheitsmodul zur Erzeugung des kryptografischen Materials aufweist. Der Kryptomaterial-Generator kann also im Kern ein Hardware-Sicherheitsmodul aufweisen. Ein solches Hardware-Sicherheitsmodul, welches auch als Hardware Security Module HSM bezeichnet wird, wurde ja eingangs bereits beschrieben. Ein typisches Beispiel für ein kommerzielles HSM kann beispielsweise das nShield Connect HSM von Thales sein. Es kann auch bei dem erfindungsgemäßen System zum Einsatz kommen. Die aufwändige Programmierung über die Hochsprache beispielsweise Java oder C++ entfällt hier, da das Transformationsmodul ausgehend von der in abstrakter Form eingegebenen Spezifikation die entsprechenden Anweisungen generiert. Die Syntax des Kryptomaterial-Generators wird dabei gemäß einer vorteilhaften Weiterbildung dieser Idee der Erfindung durch die Syntax des Hardware-Sicherheitsmoduls vorgegeben.

Der Kryptomaterial-Server kann ferner eine Kryptomaterial-Datenbank aufweisen, in welcher Kryptomaterial, welches von dem Kryptomaterial-Generator erzeugt worden ist, gespeichert oder zwischengespeichert werden kann. Der Kryptomaterial-Verteiler ist dann direkt oder mittelbar über die Datenbank mit dem Kryptomaterial-Generator verbunden. Die Kryptomaterial-Datenbank selbst kann beispielsweise direkt mit dem Hardware-Sicherheitsmodul des Kryptomaterial-Generators und parallel dazu mit dem Transformationsmodul, also unter Umgehung des Hardware-Sicherheitsmoduls, verbunden sein. Eine vergleichbare Verbindung ist zum Kryptomaterial-Verteiler denkbar. Damit lassen sich auf verschiedenen Wegen Daten weitergeben, entweder über die Kryptomaterial-Datenbank oder an dieser vorbei und entweder über das HSM - was die letztlich sicherste Variante ist - oder gegebenenfalls auch an diesem vorbei.

Die Ausführbarkeit der abstrakt formal eingegebenen Spezifikationen lässt sich nun im Wesentlichen über zwei Wege erreichen. Entweder umfasst das Transformationsmodul einen Interpreter zur Erzeugung der Syntax des Kryptomaterial-Generators. Dieser setzt letztlich die abstrakt formal über das Benutzerinterface eingegebenen Spezifikationen in die Syntax des Kryptomaterial-Generators, und hier insbesondere seines Hardware-Sicherheitsmoduls, entsprechend um. Eine implementierte Krypto-Bibliothek in dem HSM bietet alle kryptografische Primitive, die zur Beschreibung des Kryptomaterials notwendig sind. Diese Primitive können dann, gegebenenfalls nach einer Anpassung ihrer Bezeichnungen, zur Verbesserung der Lesbarkeit, direkt in der abstrakten Sprache für die Spezifikationen genutzt werden und anschließend von dem Interpreter direkt den Primitiven des Hardware Security Modules zugeordnet werden.

Beim Interpreter-basierten Ansatz wird also ein gemeinsamer Interpreter für alle Anwendungen der höheren Programmiersprache implementiert. Dieser Interpreter vereint die Logik aller denkbaren Anwendungen. Dies bedeutet, dass er alle denkbaren validen Spezifikationen, beispielsweise mit Hilfe des HSM, in das entsprechende Kryptomaterial umsetzen bzw. das HSM entsprechend anweisen kann, dieses Kryptomaterial zu erzeugen. Letztlich bedeutet dies, dass die Spezifikationen in der oben beschriebenen abstrakten Sprache vom Interpreter direkt, also ohne zwischengeschaltete Übersetzung und Installation eines Programms auf dem Kryptomaterial-Server, ausgeführt werden können.

Der alternative Ansatz sieht es vor, dass das Transformationsmodul einen Übersetzer zur Erzeugung eines Programmcodes umfasst, welcher zur Erzeugung der Syntax des Kryptomaterial-Generators eingerichtet ist. Bei einem solchen Übersetzer-basierten Ansatz erzeugt der Übersetzer aus der abstrakten Spezifikation letztlich den Quellcode für ein Programm in einer höheren Programmiersprache, beispielsweise in Java. Dieses wird anschließend auf dem Kryptomaterial-Server installiert und danach für die Erzeugung des kryptografischen Materials mit dem Kryptomaterial-Generator oder auch hier insbesondere wieder mit seinem HSM, sofern dieses vorhanden ist, genutzt.

Eine weitere sehr günstige Ausgestaltung der Erfindung sieht es vor, dass das Benutzerinterface im Entwicklermodul einen textorientierten oder grafikorientierten syntaxgesteuerten Editor zur Eingabe der Spezifikationen in abstrakter Form umfasst. Somit kann über einen geeigneten text- und/oder grafikorientierten Editor ein komfortables Arbeiten bei der Eingabe der Spezifikationen einerseits und das direkte Abfangen von eventuellen Eingabefehlern andererseits realisiert werden. Gemäß einer sehr vorteilhaften Weiterbildung kann das Benutzerinterface dafür Prüfmodule zur Syntaxprüfung und/oder Typprüfung der Eingaben der Spezifikation umfassen, unabhängig davon, wie diese eingegeben worden sind, insbesondere jedoch in Kombination mit dem eben angesprochenen textorientierten und/oder grafikorientierten syntaxgesteuerten Editor.

Eine sehr günstige Weiterbildung sieht es ferner vor, dass das Benutzerinterface bzw. die damit zumindest mittelbar gekoppelte Spezifikationsschnittstelle dazu eingerichtet ist, die Eingabe der Spezifikationen in einer deklarativen, nicht operationalen Form zu verarbeiten. Eine solche Eingabe in deklarativer Form ist für die Spezifikationen bezüglich des zu erzeugenden kryptografischen Materials vollständig ausreichend und erlaubt letztlich eine sehr einfache und effiziente Eingabe und die einfache und zuverlässige Umsetzung der eingegebenen Spezifikationen in dem Transformationsmodul in die Syntax des Kryptomaterial-Generators.

Der Kryptomaterial-Server kann ferner gemäß einer sehr vorteilhaften Weiterbildung des erfindungsgemäßen Systems eine Verteilschnittstelle umfassen, über welche eine direkte oder mittelbare Anbindung zumindest eines, typischerweise jedoch mehrerer Empfänger und/oder Nutzer des kryptografischen Materials realisiert ist. Der Kryptomaterial-Verteiler verteilt also die entsprechenden Informationen an Empfänger, welche gleichzeitig Nutzer sind, oder welche das Material ihrerseits an Nutzer weiterverteilen, um so die Kontrolle auch über die Verteilung des generierten kryptografischen Materials durchgängig im Bereich des Kryptomaterial-Servers zu kontrollieren.

Das erfindungsgemäße Verfahren dient nun zur Erzeugung von kryptografischem Material mittels eines derartigen erfindungsgemäßen Systems nach einer oder mehrerer der beschriebenen Ausgestaltungen, wobei das kryptografische Material für fahrzeugspezifische informationstechnische Systeme generiert wird. Dazu wird bei dem erfindungsgemäßen Verfahren das Entwicklermodul genutzt, um für die spezielle Anwendung geeignete Spezifikationen vorzugeben, wonach das kryptografische Material anhand der vorgegebenen Spezifikationen für jede einzelne spezifische Anwendung in dem erfindungsgemäßen System erzeugt und von diesem an den Empfänger und/oder Nutzer der spezifischen Anwendung verteilt wird. Das Verfahren zur Nutzung des erfindungsgemäßen Systems kann dieses also ideal nutzen, insbesondere um fahrzeugspezifische informationstechnische Systeme mit kryptografischem Material zu versorgen, also die eingangs geschilderten komplexen Vorgänge im Bereich der Kommunikationssicherheit in einem Fahrzeug-Ökosystem entsprechend zu optimieren.

Weitere vorteilhafte Ausgestaltungen des erfindungsgemäßen Systems und des Verfahrens ergeben sich auch aus den Ausführungsbeispielen, welche nachfolgend unter Bezugnahme auf die Figuren näher beschrieben sind.

Dabei zeigen:
- Fig. 1: eine schematische Darstellung eines Übersetzer-basierten Ansatzes eines Transformationsmoduls;
- Fig. 2: eine schematische Darstellung eines Interpreter-basierten Ansatzes eines Transformationsmoduls;
- Fig. 3: einen alternativen Interpreter-basierten Ansatz, bei dem die Eingabe und die Nutzung der Spezifikationen durch den Interpreter voneinander getrennt sind; und
- Fig. 4: eine Übersicht über ein das erfindungsgemäße System aufweisendes Gesamtsystem zur Generierung und Verteilung von kryptografischem Material.

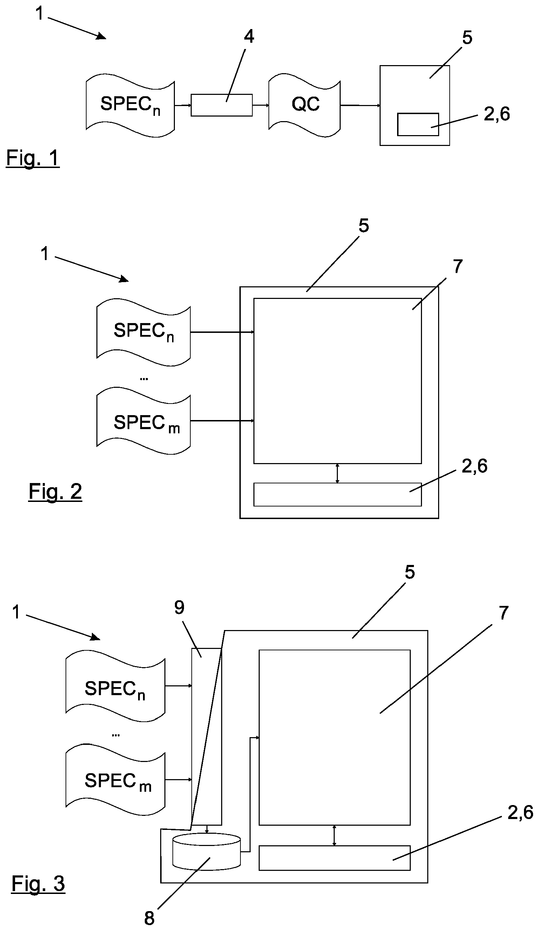

Das erfindungsgemäße System schlägt als wesentlichen Bestandteil ein Transformationsmodul 1 vor, welches dazu entwickelt und dazu eingesetzt ist, eine abstrakte formale und ausführbare Sprache zur eindeutigen Beschreibung der Spezifikationen von kryptografischem Material zu gewährleisten. Die Transformation in die Syntax eines später noch näher dargestellten und beschriebenen Kryptomaterial-Generators 2 kann dabei im Wesentlichen auf zwei verschiedenen Wegen erreicht werden. Der eine Weg ist in der Darstellung der Figur 1 angedeutet und setzt auf einen Übersetzer 4. Über ein in den Figuren 1 und 2 nicht dargestelltes Benutzerinterface 3 werden Spezifikationen SPEC eingegeben, und zwar für eine spezielle Anwendung n, für welche kryptografisches Material generiert werden soll. Die Spezifikationen SPECₙ gelangen dann in den Übersetzer 4 und werden von diesem in Quellcode QC für die jeweilige Anwendung n umgewandelt. Dieser Quellcode QCₙ wird dann als Programm in einer entsprechenden Hochsprache, in der der Übersetzer 4 den Quellcode QC generiert hat, beispielsweise in Java, auf einem Kryptomaterial-Server 5 installiert. Teil dieses Kryptomaterial-Servers 5 ist dabei der Kryptomaterial-Generator 2 und insbesondere ein in dem Kryptomaterial-Generator 2 zwar nicht zwingend, jedoch überwiegend vorhandenes Hardware-Sicherheitsmodul 6, welches auch als Hardware Security Module oder HSM bezeichnet wird.

Eine Alternative zu diesem Ansatz mit dem Übersetzer 4 stellt ein Interpreter-basierter Ansatz des Transformationsmoduls 1 dar. Anhand der Figur 2 ist ein solcher Ansatz beispielhaft dargestellt. Dabei sollen verschiedene Spezifikationen SPECₙ bis SPEC, für verschiedene Anwendungen n, m direkt einem Interpreter 7 zugeführt werden, welcher als gemeinsamer Interpreter 7 für die Spezifikationen SPECₙ bis SPECₘ aller Anwendungen n, m eine höhere Programmiersprache nutzt. Der Interpreter 7 vereint die Logik aller denkbaren Programmierungen und kann somit für jede denkbare valide Spezifikation SPEC, insbesondere mit Hilfe des HSM 6 über den Kryptomaterial-Generator 2, welcher dieses HSM 6 umfasst, das gewünschte kryptografische Material erzeugen. Dies bedeutet insbesondere, dass die Spezifikationen vom Interpreter 7 direkt, also ohne zwischengeschaltete Übersetzung und insbesondere ohne zwischengeschaltete Installation des Quellcodes QC ausgeführt werden können.

Da für jede der Anwendungen n, m eine eigene Spezifikation erstellt werden muss, und um zu verhindern, dass diese jedes Mal neu eingegeben werden muss, können die einzelnen Spezifikationen in einer Spezifikations-Datenbank 8 abgelegt und bei Bedarf von dem Interpreter 7 wieder geladen und ausgeführt werden. Dies ist in der Darstellung der Figur 3 entsprechend angedeutet. Eine Spezifikationsschnittstelle 9 verbindet die einzelnen Spezifikationen SPECₙ bis SPEC, mit dieser Spezifikations-Datenbank 8, welche dann wiederum mit dem Interpreter 7 und über diesen mit dem Kryptomaterial-Generator 2 bzw. dessen HSM 6 entsprechend verbunden ist.

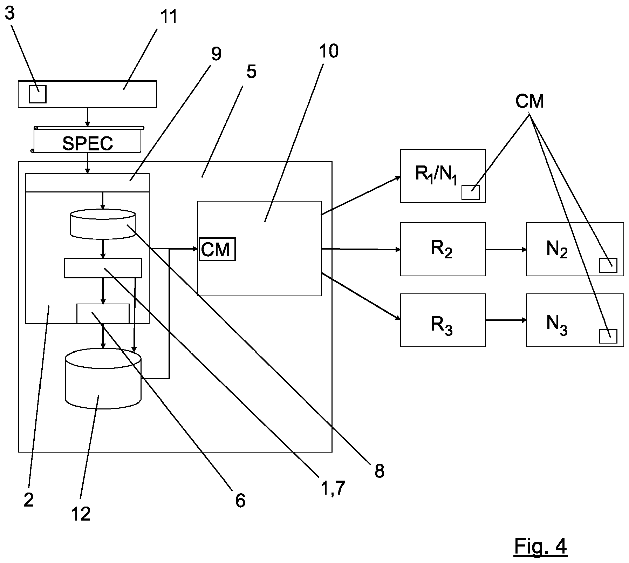

In der Darstellung der Figur 4 ist nun ein Gesamtsystem gezeigt. Dieses dient zur Erzeugung von kryptografischem Material bzw. Kryptomaterial CM, welches vorzugsweise in einem Fahrzeug-Ökosystem Verwendung finden soll. Der dort eingesetzte Kryptomaterial-Server 5 umfasst dabei in an sich bekannter Art und Weise den Kryptomaterial-Generator 2 in einer beispielhaften für das hier vorliegende System charakteristischen Ausführungsform, welche rein beispielhaft auf Basis eines Interpreters 7 als wesentlicher Bestandteil des Transformationsmoduls 1 dargestellt ist. Der an sich bekannte Teil des Kryptomaterial-Servers 5 umfasst neben dem grundlegend, nicht jedoch in dieser Ausgestaltung, ebenso bekannten Kryptomaterial-Generator 2, einen Kryptomaterial-Verteiler 10, über welchen das Kryptomaterial CM an verschiedene Empfänger R₁, R₂, R₃ verteilt wird. Die Empfänger können dabei beispielsweise, wenn man das Gesamtsystem aus Sicht eines Fahrzeugherstellers sieht, der Email-Account eines Lieferanten sein, der Server eines Lieferanten, der das Kryptomaterial CM dann weiter verteilt, oder auch der Server des Herstellers, beispielsweise am Ende des Herstellungsprozesses bzw. dem Bandende der Fahrzeugherstellung. Das Kryptomaterial wird dann von den Empfängern R₁, R₂, R₃ an Nutzer weitergegeben, welche hier mit N₁, N₂, N₃ bezeichnet sind Dabei können die Nutzer N₂, N₃ und die Empfänger R₂, R₃ getrennt voneinander sein, wenn beispielsweise über einen Server als Empfänger R₂ die Daten an ein Fahrzeug als Nutzer N₂ weitergegeben werden, sodass letztlich das kryptografische Material CM beim Nutzer N₂, also beispielsweise in der Steuereinheit eines Fahrzeugs, zur Verfügung steht. Selbstverständlich ist es auch denkbar, dass Empfänger R₁ und Nutzer N₁ ein und dieselbe Einheit sind, beispielsweise ein Server, welcher mit dem Fahrzeug kommuniziert. Weitere Beispiele für Nutzer N sind beispielsweise Applikationen auf mobilen Endgeräten, welche eine Fahrberechtigung, eine Zugangsberechtigung für das Fahrzeug oder andere aus Sicherheitsgründen zu verschlüsselnde Kommunikationen realisieren.

Das Kryptomaterial CM wird also auf dem Kryptomaterial-Server 5 entsprechend erzeugt und von dem Kryptomaterial-Verteiler 10 weiter verteilt. Zur Erzeugung des für die jeweilige Anwendung n, m geeigneten Kryptomaterials CM ist nun ein Entwicklermodul 11 vorgesehen. Dieses Entwicklermodul 11 umfasst beispielsweise einen geeigneten Editor, um textbasiert und/oder grafikbasiert die entsprechenden Spezifikationen SPEC für das kryptografische Material CM der jeweiligen Anwendung n, m einzugeben. Wie eingangs bereits erwähnt, kann dafür eine Syntaxprüfung und dergleichen bereits im Editor selbst erfolgen. Die Eingabesprache oder die grafische Eingabe ist dabei abstrakt formal und somit eindeutig verständlich, sowohl für verschiedene menschliche Benutzer des Entwicklermoduls 11 bzw. seines Benutzerinterfaces 3 sowie für das System selbst. Im Wesentlichen analog zur Darstellung in der Ausgestaltung gemäß Figur 3 werden die Spezifikationen über eine Schnittstelle 9 in den Kryptomaterial-Generator 2 übertragen. Dabei kann vorzugsweise die Spezifikation-Datenbank 8 vorhanden sein, um die bereits im Rahmen der Figur 3 diskutierten Vorteile zu nutzen. Im Anschluss folgt das Transformationsmodul 1, welches hier Interpreter-basiert ausgebildet ist, grundlegend jedoch genauso gut als Übersetzer-basiertes Transformationsmodul 1 realisiert sein könnte. Der Kryptomaterial-Generator 2 in der Darstellung gemäß Figur 4 soll in jedem Fall ein HSM 6 umfassen. Nun ist es möglich, einerseits vom Transformationsmodul 1 bzw. Interpreter 7 und andererseits vom HSM 6 entsprechendes Kryptomaterial CM zur Verfügung zu stellen. Dieses wird dann in einer optionalen Kryptomaterial-Datenbank 12 gespeichert und von dort sowie gegebenenfalls auch ohne eine Zwischenspeicherung, wie es in der Darstellung der Figur 4 angedeutet ist, zur Verteilung an den Kryptomaterial-Verteiler 10 weitergegeben. Von diesem aus erfolgt dann die oben bereits beschriebene Verteilung des Kryptomaterials an die Empfänger R₁, R₂, R₃ bzw. Nutzer N₁, N₂, N₃. Die Spezifikations-Datenbank 8 bietet dabei den Vorteil, dass mit zunehmender Nutzung des Kryptomaterial-Generators 2 sich diese Datenbank immer weiter füllt, sodass bei verschiedenen vorliegenden Systemen der Interpreter 7 in der Lage ist, entsprechend der Spezifikationen SPEC, sofern ihm diese bereits bekannt sind, die zugehörigen Spezifikationen SPEC für die entsprechende Aufgabe direkt aus der Spezifikations-Datenbank 8 zu beziehen und daraus vollautomatisch das benötigte Kryptomaterial CM zu generieren, um so die Eingabe von sich wiederholenden Vorgängen über das Entwicklermodul 11 einsparen zu können.

Der Entwicklung einer formalen abstrakten Sprache zur Nutzung in dem Transformationsmodul 1 liegen dabei die nachfolgend erläuterten Überlegungen zugrunde.

Als Eingangsgröße für ein Verfahren zur Erzeugung des geeigneten Kryptomaterials CM werden Namen bzw. Bezeichner derjenigen Kombinationen aus Empfängern R₁, R₂, R₃ und Nutzern N₁, N₂, N₃, welche das Kryptomaterial CM benötigen, verwendet. Außerdem sind abstrakte Spezifikationen SPEC für die jeweiligen Kombinationen notwendig, welche das von diesen benötigte Kryptomaterial, also beispielsweise symmetrische oder asymmetrische Schlüssel, Zertifikate, Zufallszahlen, Hashwerte und dergleichen benötigen.

Die Ausgangsgrößen für das Transformationsmodul 1 bestehen dann im Wesentlichen aus einer Liste von Kryptomaterial-Datensätzen mit einem Datensatz für jeden SystemBezeichner, die entsprechend der Eingangsgröße der Spezifikation des kryptografischen Materials CM entsprechen. Um dies entsprechend umzusetzen, sind folgende Schritte notwendig: Zuerst müssen die benötigten Basistypen entsprechend identifiziert werden, beispielsweise kann die Definition der Systembezeichner wie beispielsweise einer Geräte-ID, einer Fahrgestellnummer oder dergleichen in Form eines STRINGs erfolgen. Ferner können Versionstypen definiert werden, beispielsweise ebenfalls in einem STRING. Weitere benötigte Basisdaten sind ebenso denkbar.

Nachfolgend muss dann die Art der benötigten Struktur identifiziert werden, beispielsweise ein ARRAY oder RECORD, um eine möglichst kompakte Beschreibung der Strukturen, beispielsweise eine Liste der Fahrgestellnummern einer Flotte in einem Feld (ARRAY) oder die Systeme eines Fahrzeugs als Hierarchie von System und Subsystemen in einem RECORD zu erreichen. Im Anschluss müssen alle von dem Hardware Security Module 6 unterstützten kryptografischen Funktionen identifiziert werden, beispielsweise Hash-Verfahren, MAC-Verfahren, symmetrische Verschlüsselungs- und Entschlüsselungsverfahren, asymmetrische Verfahren (RSA, ECC etc.), X.509-Zerifikate samt allen unterstützten Parametern und Varianten. Hierfür sind entsprechende Schreibweisen und möglichst sprechende und leicht verständliche Namen zu definieren. Ferner müssen alle von den identifizierten Kryptofunktionen benötigten Datentypen und Formate für die Eingabe und Ausgabe identifiziert und festgelegt werden. Auch hierfür sollten passende sprechende Namen, wie beispielsweise OctetString gewählt werden. Anschließend muss eine Erweiterung der Kryptofunktionen von Basistypen auf strukturierte Typen definiert werden. Jetzt lässt sich ein Sprachkonstrukt für die Zusammensetzung und die Codierung des auszugebenden Kryptomaterials CM entsprechend beschreiben.

Entscheidend ist es nun, eine Grammatik festzulegen, die die Beschreibung des Kryptomaterials CM mit Hilfe der identifizierten Basistypen, strukturierten Typen und Kryptofunktionen sowie des auszugebenden Datensatzes erlaubt. Diese Grammatik beschreibt dabei eine einfach interpretierbare deklarative Sprache, da das Kryptomaterial statisch und damit deklarativ beschrieben werden kann. Insbesondere ist eine nicht operationale Sprache notwendig, sodass die Grammatik entsprechend einfach bleibt. Dabei sind insbesondere FOR-Schleifen, beispielsweise zur Initialisierung und Bearbeitung von ARRAYS ausreichend. Insbesondere werden keine sonst in der Programmierung üblichen WHILE-Schleifen benötigt. Dies hat den entscheidenden Vorteil, dass die Programme immer zuverlässig bis zum Ende durchlaufen, unabhängig von eventuellen Parametern, welche bei der Abfrage einer WHILE-Schleife ein solches konsequentes Durchlaufen des Programms nicht garantieren können. Ferner sind keine Rekursionen notwendig. Auch keine dynamischen Datenstrukturen werden benötigt. Benutzerdefinierte Funktionen, Prozeduren und Methoden sind ebenfalls nicht notwendig, da die vordefinierten Funktionen zur Nutzung der Kryptofunktionen hier ausreichen.

Der Interpreter kann nun diese Grammatik nutzen, um eine der Grammatik entsprechende Spezifikation SPEC in eine Reihe von Befehlen einer höheren Programmiersprache wie beispielsweise Java oder auch C++ zu übersetzen, die dann wiederum von dem HSM 6 genutzt werden. Weil die Zielsprache selbst eine Turingmächtige Programmiersprache ist, und weil in der Spezifikationssprache ausschließlich die von dem HSM 6 unterstützten Kryptofunktionen verwendet werden, ist die Zielsprache vollständig. Sie deckt also alle denkbaren Spezifikationen ab. Die zu entwickelnde Sprache ist dabei entsprechend einfach, da sie aufgrund der oben beschriebenen Einschränkung wie ihren deklarativen, nicht operationalen Charakter eine entsprechend einfache Entwicklung darstellt und somit einen einfachen Interpreter 7 als Beispiel für das Transformationsmodul 1 ermöglicht.

Die zu definierende abstrakte Sprache hängt jeweils eng mit der Mächtigkeit des im zugrundeliegenden Kryptomaterial-Generator 2 verbauten HSMs 6 zusammen, denn das HSM 6 definiert letztlich die Syntax für den Kryptomaterial-Generator 2 und bildet vor allem auch den Anker für die Sicherheit des erzeugten Kryptomaterials CM. Um eine hohe Sicherheit zu erreichen sollte im Wesentlichen das gesamte erzeugte Kryptomaterial CM innerhalb des HSMs 6 erzeugt werden. Mechanismen, die das HSM 6 nicht unterstützt, sind zwar denkbar und in Figur 4 angedeutet. Sie sollten jedoch in einem maximal sicheren System bei der Spezifikation SPEC erst gar nicht verwendet werden.

Die Anbindung der abstrakt formalen Sprache an die Syntax des HSMs 6 hat nun jedoch zur Folge, dass generell für jedes HSM 6 ggf. eine leicht abweichende Sprache zu entwickeln wäre. Um diesen Aufwand zu vermeiden bieten sich im Wesentlichen zwei Lösungsansätze an.

So kann die Sprache in einem ersten Ansatz modular aufgebaut sein. Zu einem obligatorischen Kern, den jedes relevante HSM 6 unterstützen sollte, können dabei weitere Sprachelemente je nach eingesetztem HSM 6 hinzufügt werden. Der Interpreter 7 an sich ist "maximal mächtig" und unterstützt "alle" HSMs, muss sich also nicht von System zu System ändern. Die Menge der akzeptierten Spezifikationen wäre aber von HSM 6 zu HSM 6 verschieden.

Der zweite Lösungsansatz sieht es vor, dass die Sprache für alle Systeme gleich ist, unabhängig vom eingesetzten HSM 6. Alle Funktionen/Mechanismen, die für die Generierung des kryptografischen Materials CM notwendig sind oder notwendig sein könnten, sind komplett vom Interpreter 7 in Software implementiert. Somit könnte der Interpreter 7 auch komplett ohne HSM 6 auskommen, was jedoch von der Sicherheit her in zumindest einigen Fällen eher bedenklich wäre.

Dabei ist es so, dass durch das Transformationsmodul 1 eine Eingabesprache für die Spezifikationen SPEC im Benutzerinterface 3 bzw. im Entwicklermodul 11 vorgegeben ist, welche in jedem Fall nicht gleich zu der Sprache ist, welche als Syntax des Kryptomaterial-Generators 2 bzw. des HSM 6 Verwendung findet.

Der Interpreter 7 kennt das dem jeweiligen System bzw. Kryptomaterial-Server 5 bzw. Kryptomaterial-Generator 2 zugrundeliegende HSM 6 und den von ihm unterstützten Funktionsumfang. Alle Funktionalitäten die von dem jeweiligen HSM 6 unterstützt werden, werden dann auch von diesem abgehandelt. D.h., der Interpreter 7 ruft statt der eigenen, eher als unsicher einzustufenden Software-Funktionen, wenn immer möglich, die, als sicher einzustufenden Funktionen des HSMs 6 auf. Nur für den Fall, dass in der Eingabe Spezifikationen SPEC verwendet wurden, die das HSM 6 nicht unterstützt, werden die zur Verfügung stehenden Software-Funktionen des Interpreters 7 aufgerufen bzw. genutzt.

Damit würde unterschiedliches kryptografisches Material CM vom System unterschiedlich sicher generiert/gespeichert/versendet. Der Benutzer des Kryptomaterial-Servers 5 kann auf unterschiedliche Weise damit umgehen. So kann dem Nutzer lediglich angezeigt werden, wie sicher das jeweilige Kryptomaterial CM erzeugt/gespeichert/versendet wurde. Dabei sind verschiedene Grade der Sicherheit denkbar, wobei sich die Sicherheit bzw. der Sicherheitsgrad sich jeweils auf verschiedene Aspekte (Generieren, Speichern, Versenden) beziehen kann. Eine sehr sichere Möglichkeit für den Benutzer wäre es z.B. den Kryptomaterial-Server 5 dabei einzustellen, dass dieser nur sicheres Kryptomaterial CM generiert. Enthält die Eingabe Spezifikationen SPEC, die der Kryptomaterial-Server 5 nicht sicher umsetzen kann, verweigert er die Generierung des Kryptomaterials CM.

## Patentansprüche

1. System zur Erzeugung von kryptografischem Material (CM), mit einem Kryptomaterial-Server (5) und einem Entwicklermodul (11), wobei der Kryptomaterial-Server (5) zumindest einen Kryptomaterial-Generator (2) und einen Kryptomaterial-Verteiler (10) umfasst, wobei der Kryptomaterial-Generator (2) dazu eingerichtet ist, kryptografisches Material (CM) anhand von über das Entwicklermodul (11) vorgebbarer Spezifikationen (SPEC) zu erzeugen,
**dadurch gekennzeichnet, dass**
der Kryptomaterial-Server (5) einen Empfangsteil einer Spezifikationsschnittstelle (9) und das Entwicklermodul (11) einen korrespondierenden Sendeteil der Spezifikationsschnittstelle (9) aufweist, welche direkt oder mittelbar zur sicheren Übertragung von Daten koppelbar sind,
wobei das Entwicklermodul (11) ein Benutzerinterface (3) aufweist oder mit einem solchen direkt oder mittelbar koppelbar ist, welches für eine Eingabe der Spezifikationen (SPEC) in abstrakter Form eingerichtet ist, und wobei ein Transformationsmodul (1) zur automatischen Transformation der eingegebenen Spezifikationen (SPEC) in eine Syntax des Kryptomaterial-Generators (2) vorgesehen ist.

2. System nach Anspruch 1,
**dadurch gekennzeichnet, dass**
das Transformationsmodul (1) in dem Kryptomaterial-Generator (2) ausgebildet ist.

3. System nach Anspruch 1 oder 2,
**dadurch gekennzeichnet, dass**
der Kryptomaterial-Generator (2) ein Hardware-Sicherheitsmodul (6) zur Erzeugung des kryptografischen Materials (CM) aufweist.

4. System nach Anspruch 3,
**dadurch gekennzeichnet, dass**
die Syntax des Kryptomaterial-Generators (2) durch die Syntax des Hardware-Sicherheitsmoduls (6) vorgegeben ist.

5. System nach einem der Ansprüche 1 bis 4,
**dadurch gekennzeichnet, dass**
der Kryptomaterial-Server (5) ferner eine Kryptomaterial-Datenbank (12) zur Speicherung des von dem Kryptomaterial-Generator (2) erzeugten kryptografischen Materials (CM) aufweist.

6. System nach Anspruch 5,
**dadurch gekennzeichnet, dass**
der Kryptomaterial-Verteiler (10) direkt und mittelbar über die Kryptomaterial-Datenbank (12) mit dem Kryptomaterial-Generator (2) verbunden ist.

7. System nach einem der Ansprüche 2 und 3 oder 4 und 5 oder 6,
**dadurch gekennzeichnet, dass**
die Kryptomaterial-Datenbank (12) direkt mit dem Hardware-Sicherheitsmodul (6) des Kryptomaterial-Generators (2) und parallel mit dem Transformationsmodul (1) in dem Kryptomaterial-Generator (2) verbunden ist.

8. System nach einem der Ansprüche 1 bis 7,
**dadurch gekennzeichnet, dass**
der Kryptomaterial-Generator (2) ferner eine Spezifikations-Datenbank (8) umfasst.

9. System nach einem der Ansprüche 1 bis 8,
**dadurch gekennzeichnet, dass**
das Transformationsmodul (1) einen Interpreter (7) zum Erzeugen der Syntax des Kryptomaterial-Generators (2) umfasst.

10. System nach einem der Ansprüche 1 bis 8,
**dadurch gekennzeichnet, dass**
das Transformationsmodul (1) einen Übersetzer (4) zum Erzeugen eines Programcodes (QC) umfasst, welcher zur Erzeugung der Syntax für den Kryptomaterial-Generator (2) eingerichtet ist.

11. System nach einem der Ansprüche 1 bis 10,
**dadurch gekennzeichnet, dass**
das Benutzerinterface (3) einen textorientierten und/oder grafikorientierten syntaxgesteuerten Editor zur Eingabe der Spezifikationen (SPEC) in abstrakter Form umfasst.

12. System nach einem der Ansprüche 1 bis 11,
**dadurch gekennzeichnet, dass**
das Benutzerinterface (3) Prüfmodule zur Syntaxprüfung und/oder Typprüfung der Eingaben der Spezifikationen (SPEC) umfasst.

13. System nach einem der Ansprüche 1 bis 12,
**dadurch gekennzeichnet, dass**
das Benutzerinterface (3) dazu eingerichtet ist, die Eingabe der Spezifikationen (SPEC) in einer deklarativen, nicht operationalen Form zu verarbeiten.

14. System nach einem der Ansprüche 1 bis 13,
**dadurch gekennzeichnet, dass**
das der Kryptomaterial-Server (2) ferner eine Verteilschnittstelle umfasst, wobei der Kryptomaterial-Verteiler (10) über die Verteilschnittstelle direkt oder mittelbar mit zumindest einem Empfänger (R₁, R₂, R₃) und/oder Nutzer (N₁, N₂, N₃) des kryptografischen Materials (CM) verbunden ist.

15. Verfahren zur Erzeugung von kryptografischem Material (CM) mittels eines Systems nach einem der Ansprüche 1 bis 14 für fahrzeugspezifische informationstechnische Systeme, wozu über das Entwicklermodul (11) für die spezifische Anwendung (n, m) geeignete Spezifikationen (SPEC) vorgegeben werden, wonach das kryptografische Material (CM) anhand der vorgegeben Spezifikationen (SPEC) für die spezifische Anwendung (n, m) in dem System erzeugt und an den Empfänger (R₁, R₂, R₃) und/oder Nutzer (N₁, N₂, N₃) der spezifischen Anwendung (n, m) verteilt wird.

## Claims

1. System for producing cryptographic material (CM), with a crypto-material server (5) and a developer module (11), wherein the crypto-material server (5) comprises at least one crypto-material generator (2) and a crypto-material distributor (10), wherein the crypto-material generator (2) is arranged to generate cryptographic material (CM) using specifications (SPEC) presettable via the developer module (11),
**characterised in that**
the crypto-material server (5) has a receiving part of a specification interface (9) and the developer module (11) has a corresponding transmitting part of the specification interface (9), which can be coupled directly or indirectly for the secure transmission of data,
wherein the developer module (11) has a user interface (3) arranged for an input of the specifications (SPEC) in abstract form or can be coupled directly or indirectly to such a user interface (3), and wherein a transformation module (1) is provided for the automatic transformation of the input specifications (SPEC) into a syntax of the crypto-material generator (2).

2. System according to claim 1,
**characterised in that**
the transformation module (1) is formed in the crypto-material generator (2).

3. System according to claim 1 or 2,
**characterised in that**
the crypto-material generator (2) has a hardware security module (6) for generating the cryptographic material (CM).

4. System according to claim 3,
**characterised in that**
the syntax of the crypto-material generator (2) is predetermined by the syntax of the hardware security module (6).

5. System according to any of claims 1 to 4,
**characterised in that**
the crypto-material server (5) furthermore has a crypto-material database (12) for storing the cryptographic material (CM) generated by the crypto-material generator (2).

6. System according to claim 5,
**characterised in that**
the crypto-material distributor (10) is connected to the crypto-material generator (2) directly or indirectly via the crypto-material database (12).

7. System according to any of claims 2 and 3 or 4 and 5 or 6,
**characterised in that**
the crypto-material database (12) is directly connected to the hardware security module (6) of the crypto-material generator (2) and parallel to the transformation module (1) in the crypto-material generator (2).

8. System according to any of claims 1 to 7,
**characterised in that**
the crypto-material generator (2) furthermore comprises a specification database (8).

9. System according to any of claims 1 to 8,
**characterised in that**
the transformation module (1) comprises an interpreter (7) for generating the syntax of the crypto-material generator (2).

10. System according to any of claims 1 to 8,
**characterised in that**
the transformation module (1) comprises a translator (4) for generating a programme code (QC) arranged for generating the syntax for the crypto-material generator (2).

11. System according to any of claims 1 to 10,
**characterised in that**
the user interface (3) comprises a text-oriented and/or graphic-oriented syntax-controlled editor for inputting the specifications (SPEC) in abstract form.

12. System according to any of claims 1 to 11,
**characterised in that**
the user interface (3) comprises checking modules for the syntax check and/or type check of the inputs of the specifications (SPEC).

13. System according to any of claims 1 to 12,
**characterised in that**
the user interface (3) is arranged for processing the input of the specifications (SPEC) in a declarative, non-operational form.

14. System according to any of claims 1 to 13,
**characterised in that**
the crypto-material server (2) furthermore comprises a distribution interface, wherein the crypto-material distributor (10) is connected via the distribution interface directly or indirectly to at least one receiver (R₁, R₂, R₃) and/or user (N₁, N₂, N₃) of the cryptographic material (CM).

15. Method for producing cryptographic material (CM) by means of a system according to any of claims 1 to 14 for vehicle-specific information technology systems, wherefore specifications (SPEC) suitable for the specific application (n, m) are predetermined via the developer module (11), whereupon the cryptographic material (CM) is generated in the system using the predetermined specifications (SPEC) for the specific application (n, m) and distributed to the receiver (R₁, R₂, R₃) and/or user (N₁, N₂, N₃) of the specific application (n, m).

## Revendications

1. Système de génération d'un matériel cryptographique (CM), avec un serveur de matériel de cryptographie (5) et un module développeur (11), dans lequel le serveur de matériel de cryptographie (5) comprend au moins un générateur de matériel de cryptographie (2) et un distributeur de matériel de cryptographie (10), le générateur de cyryptomatériel (2) étant conçu pour générer un matériel cryptographique (CM) au moyen de spécifications (SPEC) prédéfinies par le module développeur (11),
**caractérisé en ce que**
le serveur de matériel de cryptographie (5) comporte une partie de réception d'une interface de spécification (9) et le module développeur (11) comporte une partie d'envoi correspondante de l'interface de spécification (9), qui sont couplées directement ou indirectement pour la transmission sécurisée de données,
dans lequel le module développeur (11) comporte une interface utilisateur (3) ou peut être couplé à celle-ci directement ou indirectement, laquelle est conçue pour une saisie des spécifications (SPEC) sous une forme abstraite, et dans lequel un module de transformation (1) sert à la transformation automatique des spécifications entrées (SPEC) dans une syntaxe du générateur de matériel de cryptographie (2).

2. Système selon la revendication 1,
**caractérisé en ce que** le module de transformation (1) est conçu dans le générateur de matériel de cryptographie (2).

3. Système selon la revendication 1 ou 2, **caractérisé en ce que** le générateur de matériel de cryptographie (2) comporte un module de sécurité matérielle (6) pour la génération du matériel cryptographique (CM).

4. Système selon la revendication 3, **caractérisé en ce que** la syntaxe du générateur de matériel de cryptographie (2) est prédéfinie par la syntaxe du module de sécurité matérielle (6).

5. Système selon l'une quelconque des revendications 1 à 4, **caractérisé en ce que** le serveur de matériel de cryptographie (5) comporte en outre une base de données de matériel de cryptographie (12) pour le stockage du matériel cryptographique (CM) généré par le générateur de matériel de cryptographie (2).

6. Système selon la revendication 5, **caractérisé en ce que** le distributeur de matériel de cryptographie (10) est relié directement ou indirectement par la base de données de matériel de cryptographie (12) au générateur de matériel de cryptographie (2).

7. Système selon l'une quelconque des revendications 2 et 3 ou 4 et 5 ou 6, **caractérisé en ce que** la base de données de matériel (12) est reliée directement au module de sécurité matérielle (6) du générateur de matériel de cryptographie (2) et en parallèle avec le module de transformation (1) dans le générateur de matériel de cryptographie (2).

8. Système selon l'une quelconque des revendications 1 à 7, **caractérisé en ce que** le générateur de matériel de cryptographie (2) comprend en outre une base de données de spécifications (8).

9. Système selon l'une quelconque des revendications 1 à 8, **caractérisé en ce que** le module de transformation (1) comporte un interprète (7) pour générer la syntaxe du générateur de matériel de cryptographie (2).

10. Système selon l'une quelconque des revendications 1 à 8, **caractérisé en ce que** le module de transformation (1) comporte un traducteur (4) pour générer un code de programme (QC) qui est conçu pour générer la syntaxe pour le générateur de matériel de cryptographie (2).

11. Système selon l'une quelconque des revendications 1 à 10, **caractérisé en ce que** l'interface utilisateur (3) comporte un éditeur commandé par la syntaxe, orienté texte et/ou orienté graphique pour l'entrée des spécifications (SPEC) sous une forme abstraite.

12. Système selon l'une quelconque des revendications 1 à 11, **caractérisé en ce que** l'interface utilisateur (3) comporte un module de vérification pour vérifier la syntaxe et/ou pour vérifier le type des saisies des spécifications (SPEC).

13. Système selon l'une quelconque des revendications 1 à 12, **caractérisé en ce que** l'interface utilisateur (3) est conçue pour traiter la saisie des spécifications (SPEC) sous une forme déclarative et non fonctionnelle.

14. Système selon la revendication 1 à 13, **caractérisé en ce que** le serveur de matériel de cryptographie (2) comporte en outre une interface de distribution, le distributeur de matériel de cryptographie (10) étant relié par l'interface de distribution directement ou indirectement à au moins un récepteur (R1, R2, R3) et/ou à un utilisateur (N1, N2, N3) du matériel cryptographique (CM).

15. Procédé de génération de matériel cryptographique (CM) au moyen d'un système selon l'une quelconque des revendications 1 à 14 pour des systèmes de technique d'informations spécifiques au véhicule, pour ce faire des spécifications appropriées (SPEC) sont prédéfinies au moyen du module développeur (11) pour l'application spécifique (n, m), ensuite le matériel cryptographique (CM) est généré au moyen des spécifications prédéfinies (SPEC) pour l'utilisation spécifique (n, m) dans le système et est distribué au récepteur (R₁, R₂, R₃) et/ou à l'utilisateur (N₁, N₂, N₃) de l'application spécifique (n, m).
